# EUROPEAN PATENT SPECIFICATION

(11) **EP 0 482 529 B1**
(45) Date of publication and mention of the grant of the patent: **10.01.1996**
(21) Application number: 91117837.4
(22) Date of filing: 18.10.1991
(51) Int. Cl.: F16H 1/32, F16H 55/06

(54) **Inscribed planetary gear device**
Getriebe mit hypocykloidatem Antrieb
Transmission à trous hypocycloidal

(30) Priority: 25.10.1990 JP 288019/90
(43) Date of publication of application: 29.04.1992
(73) Proprietor: SUMITOMO HEAVY INDUSTRIES, LTD, Tokyo 100 (JP)
(72) Inventor: Yamaguchi, Katuyoshi, Kasaderacho, Minami-ku, Nagoya-shi (JP)
(74) Representative: Henkel, Feiler, Hänzel & Partner

(56) References cited:
- DE-C- 3 325 037
- FR-A- 797 130
- FR-A- 990 493
- FR-A- 2 320 469
- US-A- 2 209 201
- US-A- 2 704 465
- US-A- 3 191 453
- US-A- 3 762 236

## Description

### BACKGROUND OF THE INVENTION

The present invention relates to an inscribed planetary gear device which is suitable for use as a speed reducer or an overdrive, particularly a speed reducer or an overdrive which is required to have a compact construction and to transmit large power.

Hitherto, inscribed planetary gear device have been known, for example from FR-A-990493 and FR-A-797130, which have a primary shaft, an externally-toothed gear carried by the primary shaft at an eccentricity, an internally-toothed gear inscribed by the externally-toothed gear, and a secondary shaft connected to the externally-toothed gear through a means which transmits only the rotation of the externally-toothed gear which takes place about the axis of the externally-toothed gear.

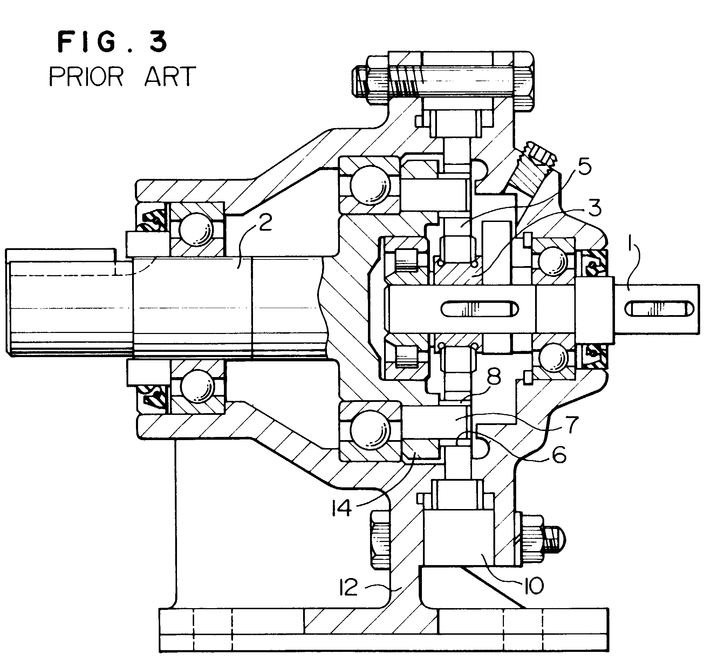

An example of this known structure is shown in Fig. 3. This example is intended for use as a speed reducer, with the primary and secondary shafts serving as an input shaft and an output shaft, respectively, and the internally-toothed gear held stationary.

An eccentric member 3 is mounted on the input shaft 1, and an externally-toothed gear 5 is fitted on the eccentric member 3. The externally-toothed gear 5 has a plurality of inner roller holes 6 which receive inner rollers 8 carried by inner pins 7.

The externally-toothed gear 5 is provided on the outer peripheral surface thereof with teeth of trochoidal or arcuate form. These teeth mesh with internal teeth of an internally-toothed gear 10 which is fixed to a casing 12.

The inner pins 7 extending through the externally-toothed gear 5 are fixed to a flange 14 of the output shaft 2 or tightly fitted in holes formed in the flange 14. One full rotation of the input shaft 1 causes one full rotation of the eccentric member 3. As a result of rotation of the eccentric member 3, the externally-toothed gear 5 tend to revolve around the input shaft 1. The internally-toothed gear 10, however, prevents the externally-toothed gear 5 from rotating about its own axis. As a consequence, the externally-toothed gear 5 revolves while inscribing the internally-toothed gear 10, without making substantial rotation.

It is assumed here that the number of the teeth on the externally-toothed gear 5 is N, while the number of the teeth of the internally-toothed gear 10 is N + 1, i.e., that the difference in the number of teeth between these two types of gears is 1. In this case, the rotational phase of the externally-toothed gear 5 is deviated by one pitch of the teeth of this gear 5 with respect to the internally-toothed gear 10 for each full rotation of the input shaft 1. Namely, the externally-toothed gear 5 rotates through an angle corresponding to one pitch of the teeth thereof. This means that one full rotation of the input shaft is reduced to -1/N rotation of the externally-toothed gear.

Oscillating component of movement of the externally-toothed gear are absorbed by the presence of gaps between the inner roller holes 6 and the inner rollers 8 and the inner rollers 8 and the inner pins 7 so that only the rotation of the externally-toothed gear 5 is transmitted to the output shaft 2 through the inner pins 7.

Consequently, a speed reduction at a reduction ratio - 1/N can be achieved.

In this known arrangement, the internally-toothed gear is fixed and the primary and secondary shafts are respectively used as the input shaft and the output shaft. This, however, is only illustrative and a reduction can also be achieved by using the internally-toothed gear as the output shaft while fixing the secondary shaft. It is also possible to use the illustrated arrangement as an overdrive by replacing the input and output shafts with each other in the described arrangement.

Conventionally, speed reducers and overdrives employing described inscribed planetary gear structure are produced substantially by machining alone, in order to meet requirements for high dimensional precision of the components such as the primary and secondary shafts, internally-toothed gear and the externally-toothed gear, as well as for smoothness of the surfaces of these components.

Mass-production by mechanical processing of these components, particularly those for compact speed reducers or overdrives, is difficult to conduct. Consequently, much labor and cost are required in the production of such compact speed reducers and overdrives.

It is possible to fabricate these components by press or die-casting method but such methods cannot provide required levels of precision and strength, thus failing to meet requirement for ability to transmit large power, although they are suitable for mass-production.

These components also could be formed from plastics by molding. Such a method provides advantages in the production of compact speed reducers or overdrives, such as improvement in the assembly efficiency, decrease in the number of parts and reduction in the production cost. The components molded from plastics, however, cannot provide strength which is required for transmission of large power. Furthermore, these components are not usable at high temperatures, which makes it difficult to continuously operate the speed reducer or the overdrive.

It is also possible to fabricate these major components by sintering. This method offers advantages such as reduction in the cost and ease of mass production of small-sized speed reducer or overdrive. Sintered parts, however, generally have low levels of density and, hence, are more fragile than ordinary steel materials. In order to eliminate this problem, it is necessary that the sintered parts are subjected to a heat treatment which tends to degrade the dimensional precision of the sintered parts, often requiring a subsequent mechanical processing. Sintering is a kind of press work and, therefore, inherently has inferior degree of concentricity. The parts fabricated by sintering, therefore, must be followed by mechanical finishing work in order to attain high degree of axial precision of the parts which is an essential requirement in speed reducers or overdrives of the inscribed planetary gear type to which the present invention pertains.

Furthermore, sintered parts generally have inferior smoothness of surfaces due to use of a material having comparatively large grains. Therefore, a sintered part, e.g., a gear, is likely to encounter with a problem concerning rolling fatigue strength. The use of a powder of comparatively large grain size as the material of a part of a compact speed reducer or overdrive inevitably reduces the module of the gear teeth, with the result that the formation of the gear teeth is restricted. Furthermore, the pores existing in such a sintered part function as notches which undesirably reduces bending strength at feet of projections.

Sintering also has various disadvantages. For instance, it is to be noted that only two-dimensional forming is possible by sintering. In addition, it is difficult to obtain parts having stepped configurations by sintering, due to restriction by the use of press jigs. Furthermore, it is not easy to sinter a thinwalled part, e.g., 1.5 mm or thinner and elongated parts.

### SUMMARY OF THE INVENTION

Accordingly, an object of the present invention is to provide an inscribed planetary gear device which is small in size but yet capable of transmitting a large power and withstandable long continuous operation and which can easily be mass-produced at a reduced cost, thereby overcoming the above-described problems of the prior art.

According to the present invention there is provided an inscribed planetary gear device, comprising a primary shaft, an externally-toothed gear having an axially extending cylindrical bore fitted around a bearing carried at an eccentricity by said primary shaft, an internally-toothed gear inscribed by said externally-toothed gear, a secondary shaft extending coaxially with said primary shaft, and an Oldham's ring disposed between said externally-toothed gear and said secondary shaft for transmitting to said secondary shaft only the rotation of said externally-toothed gear taking place about the axis of said externally-toothed gear, said Oldham's ring is formed with at least one Oldham's projection projecting toward said externally-toothed gear, said externally-toothed gear is provided with a flange at an end thereof on the side of said Oldham's ring to extend radially inwardly, said flange being formed with at least one Oldham's groove to receive said Oldham's projection, and said externally-toothed gear is formed by metal powder injection molding.

In a preferred embodiment of this inscribed planetary gear device the secondary shaft has a unitary structure comprising a journal portion, a cover fitting portion and a flange portion extending radially outwardly from a distal end of said cover fitting portion, said flange portion being formed with at least one second Oldham's projection projecting toward said Oldham's ring and received by at least one second Oldham's groove formed in said Oldham's ring and an inner bore rotatably receiving said primary shaft, and said secondary shaft is formed by metal powder injection molding.

Preferably, the Oldham's ring is formed by metal powder injection molding.

The metal powder injection molding is a method which has been noticed in recent years as a substitute for conventional production methods such as mechanical processing, die-casting, powder metallurgy and lost-wax method.

The metal powder injection molding process usually has the steps of kneading a mixture of a metal powder having a mean grain size of 10 µm or so and an organic binder at an elevated temperature or normal temperature so as to obtain a uniform mixture, pelletizing the mixture by means of a pelletizer so as to obtain an injection material, and forming an article by injecting this material by means of an injection molding machine.

The product obtained from an injection molding machine is generally referred to as "green part". The green part is then subjected to a treatment for removing the binder component, such as heating, decompression, pressurizing, extraction or over-critical method. The part after the removal of the binder component is generally referred to as "brown part". The brown parts are then sintered in a gas atmosphere of, for example, N₂, H ₂or NH₃, or in a vacuum. The sintered part is generally referred to as "white part".

The production method relying upon metal powder injection molding is optimum for use in the mass-production of small-sized parts having intricate configurations, such as the parts of an inscribed planetary gear device to which the present invention pertains. Namely, the injection molding provides a high dimensional precision, while the use of metal powder ensures a high strength which enables transmission of large power. In addition, this method enables mass-production of parts at a comparatively low cost. The parts fabricated by this method can sustain high temperatures, so that the device assembled from such parts can stand a long continuous operation.

The above and other objects, features and advantages of the present invention will become clear from the following description of the preferred embodiment taken in conjunction with the accompanying drawings.

### BRIEF DESCRIPTION OF THE DRAWINGS

Fig. 1 is a schematic vertical sectional view of a speed reducer incorporating an inscribed planetary gear device embodying the present invention;
Fig. 2 is an exploded perspective view of the speed reducer shown in Fig. 1; and
Fig. 3 is a sectional view of a speed reducer employing a known inscribed planetary gear structure.

### DESCRIPTION OF THE PREFERRED EMBODIMENT

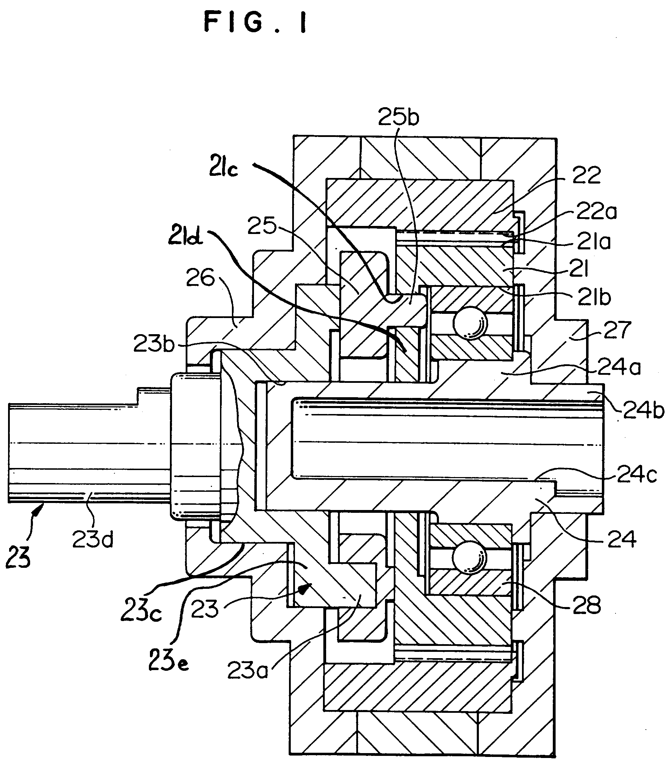

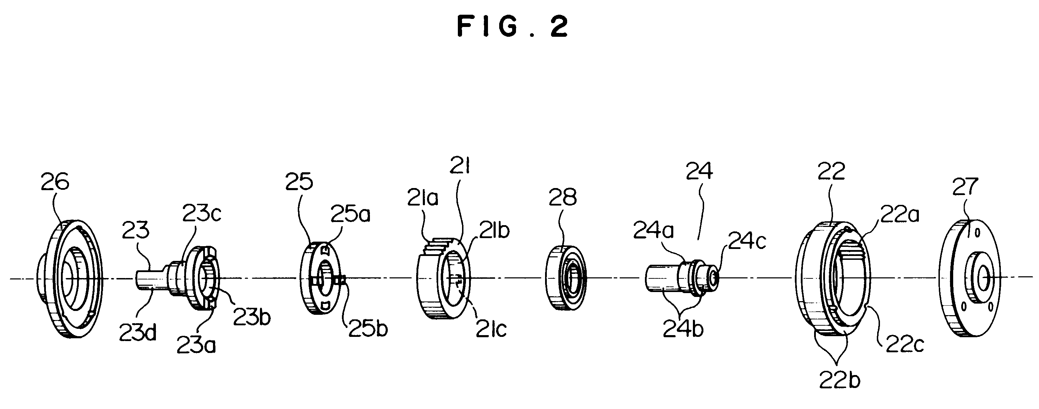

Referring to Figs. 1 and 2, a speed reducer has an inscribed planetary gear device of the invention which includes an externally-toothed gear 21, an internally-toothed gear 22, an output shaft 23 as a secondary shaft, an input shaft 24 as a primary shaft, an Oldham's ring 25, an output shaft cover 26, an inner cover 27 and a bearing 28.

The input shaft 24 is a hollow shaft having an internal bore 24c and has an eccentric portion 24a.

An externally-toothed gear 21 is carried by the eccentric portion 24a of the input shaft 24 through the intermediary of a bearing 28. Numeral 21a denotes teeth of the externally-toothed gear 21. The bearing 28 is received in a bore 21b formed in the externally-toothed gear 21. The externally-toothed gear 21 also has a flange 21a and formed therein an Oldham's groove 21c which engages with an Oldham's projection 25b of the Oldham's ring 25. The teeth 21a of the externally-toothed gear 21 engage with teeth 22a on the internally-toothed gear 22. Numeral 22b denotes socket portions, while 22c denote holes for receiving tie bolts (not shown).

The Oldham's ring 25 includes the Oldham's groove 25a and the Oldham's projection 25b as explaiend before. The Oldham's projection 25b engages with the Oldham's groove 21c formed in the externally-toothed gear 21 as mentioned before, while the Oldham's groove 25a engages with the Oldham's projection 23a integral with the output shaft 23, thus forming an Oldham's mechanism which is known per se and which serves to transmit only the rotation of the externally-toothed gear 21 about its axis of this gear, while absorbing revolving component of movement of this gear.

Numeral 23b denotes a bore formed in a flange 23e of the output shaft 23, 23c denotes a cover-fitting portion and 23d denotes a journal portion.

One full rotation of the input shaft 24 causes one full rotation of the eccentric portion 24a. As a result of rotation of the eccentric portion 24a, the externally-toothed gear 21 tend to revolve around the input shaft 24. The internally-toothed gear 22, however, prevents the externally-toothed gear 21 from rotating about its own axis. As a consequence, the externally-toothed gear 21 revolves while inscribing the internally-toothed gear 22, without making substantial rotation.

It is assumed here that the number of the teeth on the externally-toothed gear 21 is N, while the number of the teeth of the internally-toothed gear 22 is N + 1, i.e., that the difference in the number of teeth between these two types of gears is 1. In this case, the rotational phase of the externally-toothed gear 5 is shifted by one pitch of the teeth of this gear 21 with respect to the internally-toothed gear 22 fixed to the casing 30, for each full rotation of the input shaft 24. Namely, the externally-toothed gear 21 rotates through an angle corresponding to one pitch of the teeth thereof. This means that one full rotation of the input shaft is reduced to -1/N rotation of the externally-toothed gear. Any revolving component of the movement of the externally-toothed gear 21 is absorbed by the Oldham's ring 25, so that only the rotation of the gear 21 about its own axis is transmitted to the output shaft 23, thus accomplishing speed reduction at a ratio of -1/N.

In this embodiment, the teeth 21a, bearing-receiving portion 21b and the portion providing the Oldham's groove 21c of the externally-toothed gear 21 are formed by one shot of metal powder injection molding which was described before.

As to the internally-toothed gear 22, the teeth 22a, socket portions 22b, and tie-bolt holes 22c are formed by one shot of metal powder injection molding.

Similarly, the Oldham's projection 23a, bore 23b in the flange, cover-fitting portion 23c and the journal portion 23d of the output shaft 23 are formed by one shot of metal powder injection molding.

In the input shaft 24, the eccentric portion 24a, the journal portion 24b and the portion defining the bore 24c are formed by one shot of metal powder injection molding.

As to the Oldham's ring 25, portions forming the Oldham's groove 25a and the Oldham's projection 25d are formed by one shot of metal powder injection molding.

By virtue of the use of the metal powder injection molding technique, it is possible to obtain a speed reducer which is small in size but yet capable of transmitting a large power. The reduction in the size of the speed reducer correspondingly reduces the peripheral velocities of the gears and, hence, friction between meshing gear teeth. The use of a metal powder as the gear material, despite the reduced sizes of the gears, permits transmission of much greater power as compared with the case where the gears are made of plastics.

It is possible to use a high-strength metal material, e.g., JIS SKH (high-speed steel) or SUJ (steel for bearing) material, provided that the requirement for the dimensional precision is met. In this case, an ability to transmit further greater power can be obtained without necessitating specific heat treatment.

The present invention also enables mass-production at a reduction cost, by virtue of the one-shot molding which completely eliminates or reduces mechanical processing.

Furthermore, the device of the present invention can withstand a long continuous operation since the parts can sustain use at temperatures higher than those for parts made of plastics.

Although the invention has been described through its preferred forms, it is to be understood that the described embodiment is only illustrative and various changes and modifications may be imparted thereto.

For instance, the metal powder injection molding may be applied only to specific portions of specific parts, although in the described embodiments all the critical portions of almost all major parts are formed by the metal powder injection molding.

As will be understood from the foregoing description, according to the present invention, it is possible to obtain an inscribed planetary gear device which is small in size but yet capable of transmitting large power, while withstanding long continuous operation, and which can be mass-produced at a reduced cost. These advantages are enjoyed also in speed reducers or overdrives which incorporate the inscribed planetary gear device of the invention.

## Claims

1. An inscribed planetary gear device, comprising: a primary shaft (24); an externally-toothed gear (21) having an axially extending cylindrical bore (21b) fitted around a bearing (28) carried at an eccentricity (24a) by said primary shaft (24); an internally-toothed gear (22) inscribed by said externally-toothed gear (21); a secondary shaft (23) extending coaxially with said primary shaft (24); and an Oldham's ring (25) disposed between said externally-toothed gear (21) and said secondary shaft (23) for transmitting to said secondary shaft (24) only the rotation of said externally-toothed gear (21) taking place about the axis of said externally-toothed gear; said Oldham's ring (25) is formed
with at least one Oldham's projection (25b) projecting toward said externally-toothed gear (21), said externally-toothed gear (21) is provided with a flange (21d) at an end thereof on the side of said Oldham's ring (25) to extend radially inwardly, said flange (21d) being formed with at least one Oldham's groove (21c) to receive said Oldham's projection (25b), and said externally-toothed gear (21) is formed by metal powder injection molding.

2. An inscribed planetary gear device according to Claim 1, characterized in that said secondary shaft (23) has a unitary structure comprising a journal portion (23d), a cover fitting portion (23c) and a flange portion (23e) extending radially outwardly from a distal end of said cover fitting portion (23c), said flange portion being formed with at least one second Oldham's projection (23a) projecting toward said Oldham's ring (25) and received by at least one second Oldham's groove formed in said Oldham's ring (25) and an inner bore (23b) rotatably receiving said primary shaft (24), and said secondary shaft (23) is formed by metal powder injection molding.

3. An inscribed planetary gear device according to Claim 2, characterized in that said Oldham's ring (25) is formed by metal powder injection molding.

## Patentansprüche

1. Einbeschriebene bzw. Innen-Planetengetriebeanordnung, umfassend: eine Primärwelle (24); ein außenverzahntes Zahnrad (21) mit einer axial verlaufenden, zylindrischen Bohrung (21b), in die ein Lager (28) eingesetzt ist, das auf einem Exzenterteil (24a) von der Primärwelle (24) getragen wird; ein innenverzahntes Zahnrad (22), dem das außenverzahnte Zahnrad (21) einbeschrieben ist; eine koaxial zur Primärwelle (24) verlaufende Sekundärwelle (23) ; und einen zwischen dem außenverzahnten Zahnrad (21) und der Sekundärwelle (23) angeordneten Oldham-Ring (25), um auf die Sekundärwelle (24) nur die Drehung des außenverzahnten Zahnrads (21) zu übertragen, die um die Achse des außenverzahnten Zahnrads stattfindet; wobei der Oldham-Ring (25) mit mindestens einem in Richtung auf das außenverzahnte Zahnrad (21) abstehenden Oldham-Ansatz (25b) geformt ist, das außenverzahnte Zahnrad (21) an seinem einen Ende an der Seite des Oldham-Rings (25) mit einem radial einwärts verlaufenden Flansch (21d) versehen ist, im Flansch (21d) mindestens eine Oldham-Nut (21c) zum Aufnehmen des Oldham-Ansatzes (25b) geformt ist und das außenverzahnte Zahnrad (21) durch Metallpulver-Spritzgießen geformt ist.

2. Einbeschriebene bzw. Innen-Planetengetriebeanordnung nach Anspruch 1, dadurch gekennzeichnet, daß die Sekundärwelle (23) eine einstückige Struktur mit einem Lagerzapfenteil (23d), einem Deckel-Aufsteckteil (23c) und einem von einem distalen Ende des Deckel-Aufsteckteils (23c) radial nach außen verlaufenden Flanschteil (23e) aufweist, das Flanschteil mit mindestens einem zweiten Oldham-Ansatz (23a), der in Richtung auf den Oldham-Ring (25) vorsteht und von mindestens einer zweiten, im Oldham-Ring (25) geformten Oldham-Nut aufgenommen ist, und einer die Primärwelle (24) drehbar aufnehmenden Innenbohrung (23b) versehen ist und die Sekundärwelle (23) durch Metallpulver-Spritzgießen geformt ist.

3. Einbeschriebene bzw. Innen-Planetengetriebeanordnung nach Anspruch 2, dadurch gekennzeichnet, daß der Oldham-Ring (25) durch Metallpulver-Spritzgießen geformt ist.

## Revendications

1. Dispositif à engrenage épicycloïdal inscrit, comprenant un arbre primaire (24), une roue dentée extérieurement (21) ayant un alésage cylindrique (21b), s'étendant axialement, ajusté autour d'un palier (28) porté dans une partie excentrique (24a) par ledit arbre primaire (24), une roue dentée intérieurement (22) inscrite par ladite roue dentée extérieurement (21), un arbre secondaire (23) s'étendant coaxialement avec ledit arbre primaire (24), et un anneau d'Oldham (25) disposé entre ladite roue dentée extérieurement (21) et ledit arbre secondaire (23) pour ne transmettre audit arbre secondaire (24) que la rotation de ladite roue dentée extérieurement (21) qui a lieu autour de l'axe de ladite roue dentée extérieurement, ledit anneau d'Oldham (25) étant formé d'au moins une saillie d'Oldham (25b) dépassant vers ladite roue dentée extérieurement (21), ladite roue dentée extérieurement (21) étant pourvue, à une de ses extrémités, sur le côté dudit anneau d'Oldham (25), d'une bride (21d) qui s'étend radialement vers l'intérieur, ladite bride (21d) présentant au moins une rainure d'Oldham (21c) pour recevoir ladite saillie d'Oldham (25b), et ladite roue dentée extérieurement (21) étant formée par moulage par injection de métal en poudre.

2. Dispositif à engrenage épicycloïdal incrit selon la revendication 1, caractérisé en ce que ledit arbre secondaire (23) a une structure unitaire comprenant une partie de tourillon (23d), une partie d'ajustement de couvercle (23c) et une partie de bride (23e) s'étendant radialement vers l'extérieur depuis une extrémité distale de ladite partie d'ajustement de couvercle (23c), ladite partie de bride présentant au moins une deuxième saillie d'Oldham (23a) dépassant vers ledit anneau d'Oldham (25) et reçue par au moins une deuxième rainure d'Oldham formée dans ledit anneau d'Oldham (25) et un alésage interne (23b) recevant à rotation ledit arbre primaire (24), et ledit arbre secondaire (23) est formé par moulage par injection de métal en poudre.

3. Dispositif à engrenage épicycloïdal inscrit selon la revendication 2, caractérisé en ce que ledit anneau d'Oldham (25) est formé par moulage par injection de métal en poudre.
